(19) Europäisches Patentamt
European Patent Office
Office européen des brevets

(11) **EP 2 463 682 B1**

(12) **EUROPÄISCHE PATENTSCHRIFT**

(45) Veröffentlichungstag und Bekanntmachung des Hinweises auf die Patenterteilung:
**06.03.2013 Patentblatt 2013/10**

(51) Int Cl.:
***G01S 11/10*** *(2006.01)*     ***G07B 15/06*** *(2011.01)*
***G08G 1/01*** *(2006.01)*

(21) Anmeldenummer: **10450189.5**

(22) Anmeldetag: **07.12.2010**

(54) **Verfahren zum Ermitteln des Abstands eines Fahrzeuges zu einer Funkbake und Funkbake hierfür**

Method for determining the distance of a vehicle to a wireless beacon and wireless beacon for same

Procédé d'établissement de la distance d'un véhicule par rapport à un capteur radio et capteur radio associé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.06.2012 Patentblatt 2012/24**

(73) Patentinhaber: **Kapsch TrafficCom AG**
**1120 Wien (AT)**

(72) Erfinder: **Nagy, Oliver**
**1190 Wien (AT)**

(74) Vertreter: **Weiser, Andreas**
**Patentanwalt**
**Kopfgasse 7**
**1130 Wien (AT)**

(56) Entgegenhaltungen:
**US-A- 5 790 052**     **US-A1- 2009 102 718**
**US-A1- 2009 303 004**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Ermitteln des Abstands eines eine Funkbake eines Straßenmautsystems passierenden Fahrzeuges zu dieser Funkbake, wobei das Fahrzeug mit einem Fahrzeuggerät ausgestattet ist, das ein Signal mit einem bekannten zeitlichen Verlauf seiner Frequenz aussendet. Die Erfindung betrifft ferner eine Funkbake zur Implementierung eines derartigen Verfahrens.

In funkbakenbasierten Straßenmautsystemen, beispielsweise nach dem DSRC- (dedicated short range communiation) oder WAVE-(wireless access in a vehicle environment) -Standard, kommunizieren von den Fahrzeugen mitgeführte Fahrzeuggeräte (onboard units, OBUs) über Kurzreichweitenfunk mit geografisch verteilten Funkbaken, sobald sie diese passieren. Die Funkkommunikation dient in der Regel zum Verorten des Fahrzeugs auf den Funkabdeckungsbereich der Funkbake, um Ortsnutzungen zu vergebühren, oder einfach auch nur zum Absetzen von Mautdaten, die von der OBU erzeugt werden, an Funkbaken auf ihrem Weg.

Häufig ist es wünschenswert, den Abstand zu bestimmen, in dem ein Fahrzeug eine Funkbake passiert, z.B. für die Ahndung von Mautvergehen bei mehrspurigen Straßen: Passieren mehrere Fahrzeuge nebeneinander auf verschiedenen Fahrspuren die Funkbake und weist eine ihrer Funkkommunikationen auf ein Mautvergehen hin, z.B. eine fehlgeschlagene Mautgebührenabbuchung, einen ungenügenden Kontostand eines Verrechnungskontos, eine defekte oder falsch eingestellte OBU usw., oder soll eine von der Fahrspur abhängige Gebührenhöhe bzw. Maut (Mehrinsassen-Fahrspur) berechnet werden, dann ist es entscheidend, zu wissen, welches der nebeneinander fahrenden Fahrzeuge hierfür verantwortlich ist, um dieses z.B. visuell vor Ort oder auf einem Beweisfoto des Straßenabschnitts der Bake identifizieren zu können.

Zur Bestimmung des Abstands sind derzeit verschiedene Verfahren bekannt. Eine Lösung besteht darin, in der Funkbake mehrere örtlich versetzte Empfangsantennen zu verwenden, um aus Phasendifferenzmessungen zwischen den von den einzelnen Antennen empfangenen OBU-Signalen die Positionen der OBUs im Funkempfangsfeld zu bestimmen. Eine andere Lösung ist aus der US 5,790,052 bekannt und beruht auf Dopplermessungen der unterschiedlichen Relativgeschwindigkeiten einer OBU gegenüber örtlich versetzten Empfangsantennen einer Funkbake, um aus dem Verhältnis der Geschwindigkeitsmesswerte das Verhältnis der Abstände zu den beiden Empfangsantennen zu bestimmen. Schließlich wäre es auch möglich, für jede Fahrspur eine separate Funkbake mit geringem Funkabdeckungsbereich zu verwenden. Alle diese bekannten Lösungen sind aufwendig, nicht zuletzt weil sie auf mehreren Empfangsantennen beruhen.

Die Erfindung setzt sich zum Ziel, ein Verfahren zur Bestimmung des Abstands einer OBU zu einer Funkbake in einem Straßenmautsystem zu schaffen, welches geringeren apparativen Aufwand zur Umsetzung benötigt als die bekannten Lösungen.

Dieses Ziel wird in einem ersten Aspekt der Erfindung mit einem Verfahren der einleitend genannten Art erreicht, welches sich auszeichnet durch die Schritte:

Empfangen des Signals in der Funkbake bei der Passage des Fahrzeuges und Aufzeichnen des zeitlichen Verlaufes seiner Frequenz relativ zum bekannten zeitlichen Verlauf;

Detektieren einer einen vorgegebenen Schwellwert überschreitenden Änderung im aufgezeichneten Frequenzverlauf;

Aufsuchen zweier zeitlich vor und nach der detektierten Änderung liegender Fernbereiche im Frequenzverlauf, welche eine Frequenzänderung unter einem Schwellwert zeigen;

Skalieren des aufgezeichneten Frequenzverlaufes derart, dass die Fernbereiche vorgegebene Werte annehmen; und

Ermitteln des genannten Abstandes aus der Steigung des skalierten Frequenzverlaufes in einem Wendepunkt desselben.

Die Erfindung macht sich den Umstand zunutze, dass die dopplerbedingte Frequenzänderung des OBU-Signals zum Zeitpunkt der unmittelbaren Passage, wenn der Abstand minimal ist, umgekehrt proportional zu dem Normalabstand zur Funkbake ist, sofern der Frequenzverlauf auf die Eigengeschwindigkeit des Fahrzeugs normiert wird. Letzteres wird durch Auswertung des Frequenzverlaufs in "Fernbereichen" bewerkstelligt: In diesen Fernbereichen ist die Entfernung des Fahrzeugs im Vergleich zum Normalabstand sehr groß und dieser vernachlässigbar, so dass das Ausmaß der Dopplerverschiebung dort im Wesentlichen nur von der Eigengeschwindigkeit abhängt und diese daraus bestimmbar ist. In weiterer Folge kann aus der Analyse des um die Eigengeschwindigkeit kompensierten Frequenzverlaufs im Nahbereich der Bake, wo die größte Änderung ("Dopplersprung") des Frequenzverlaufs in seinem Wendepunkt auftrifft, die Abhängigkeit vom Normalabstand und damit dieser selbst ermittelt werden. Im Ergebnis kann mit einem einzigen Empfänger und einer einzigen Antenne der Passageabstand alleine aus der Funkkommunikation zwischen OBU und Funkbake bestimmt werden.

Die Erfindung eignet sich für Fahrzeuggeräte mit beliebigen Arten von bekannten zeitlichen Verläufen ihrer Sendefrequenz, sei es, daß sie eine konstante Frequenz aussenden, z.B. eine konstante Trägerfrequenz, in welchem Fall der bekannte zeitliche Verlauf einfach "konstant" ist, oder im Frequency-Hopping-Verfahren wechselnde Frequenzen aussenden, deren Frequenzwechselverlauf bekannt ist, so daß der in der Funkbake empfangene Frequenzverlauf auf den bekannten Sendefrequenzverlauf normiert bzw. referenziert werden kann.

Bevorzugt wird aus dem ermittelten Abstand anschließend die Fahrspur einer mehrspurigen Straße bestimmt, auf welcher sich das Fahrzeug bewegt. Dadurch können Mautvergehen bei parallel passierenden Fahrzeugen eindeutig einer Fahrspur und dem bzw. den darauf befindlichen Fahrzeug(en) zugeordnet werden.

Gemäß einer ersten vorteilhaften Ausführungsform der Erfindung wird der Wendepunkt durch Aufsuchen jenes Punktes im Frequenzverlauf bestimmt, an dem die Frequenz einen vorgegebenen Wert hat, welcher insbesondere die Nenn- bzw. Ruhefrequenz der OBU ist. Diese Ausführungsform eignet sich daher für jene Fälle, in denen die Nennfrequenz der Funkkommunikation der OBU vorbekannt ist.

Gemäß einer alternativen bevorzugten Ausführungsform der Erfindung wird der Wendepunkt durch Aufsuchen jenes Punktes im Frequenzverlauf bestimmt, an dem die Frequenz dem Frequenzmittelwert der Fernbereiche entspricht. Für diese Ausführungsform muss die Nennfrequenz der OBU nicht bekannt sein, das Verfahren stellt sich automatisch darauf ein.

Die mit dem Verfahren der Erfindung ausgewertete Dopplerverschiebung kann an jeder beliebigen Frequenz des Signals gemessen werden, sei es eine Trägerfrequenz oder bevorzugt eine Modulationsfrequenz desselben. Unter Modulationsfrequenz wird eine Frequenz jeder beliebigen Modulation des OBU-Signals verstanden, sei es eine einfache Frequenz- oder Amplitudenmodulation, eine der Modulationsfrequenzen einer OFDM-Modulation, oder auch eine Puls- bzw. Burstmodulation, wie sie durch periodisches Übertragen von ganzen Datenblöcken auftritt; auch eine solche Blockwiederholungsrate kann als Modulationsfrequenz betrachtet werden, deren Dopplerfrequenzverschiebung gemessen werden kann.

Das Verfahren der Erfindung eignet sich für alle Arten von funkbakenbasierten Straßenmautsystemen. Besonders geeignet ist das Verfahren für DSRC- und WAVE-Straßenmautsysteme, bei welchen zum Aussenden des Signals ein DSRC- oder WAVE-Sender des Fahrzeuggerätes verwendet wird. Andere Ausführungen in RFID-Technologie, aber auch jegliche zellularen (z.B. GSM, UMTS, LTE) und Nahbereichs-Funktechnologien (z.B. Bluetooth, WLAN), sind ebenfalls möglich.

In einem weiteren Aspekt schafft die Erfindung auch eine Funkbake für ein Straßenmautsystem zum Ermitteln des Abstandes eines diese passierenden Fahrzeuges, welches mit einem Fahrzeuggerät ausgestattet ist, das ein Signal mit einem bekannten zeitlichen Verlauf seiner Frequenz aussendet, welche Funkbake sich auszeichnet durch:

einen Empfänger, welcher zum Empfangen des Signals eines passierenden Fahrzeuges ausgebildet ist;
einen an den Empfänger angeschlossenen Speicher, der zum Aufzeichnen des zeitlichen Verlaufes der Frequenz des empfangenen Signals relativ zum bekannten zeitlichen Verlauf ausgebildet ist;
einen an den Speicher angeschlossenen Detektor, welcher zum Detektieren einer Änderung im aufgezeichneten Frequenzverlauf ausgebildet ist;
eine an den Detektor und den Speicher angeschlossene Auswerteeinrichtung, die zum Aufsuchen zweier zeitlich vor und nach der detektierten Änderung liegender Fernbereiche im Frequenzverlauf ausgebildet ist, welche eine Frequenzänderung unter einem Schwellwert zeigen;
einen an den Speicher und die Auswerteeinrichtung angeschlossenen Skalierer, der dazu ausgebildet ist, den aufgezeichneten Frequenzverlauf so zu skalieren, dass die Fernbereiche vorgegebene Werte annehmen; und
einen dem Skalierer nachgeschalteten Differenzierer, der die Steigung des skalierten Frequenzverlaufes in einem Wendepunkt desselben bestimmt und daraus den Abstand ermittelt.

Bevorzugt ist die Funkbake an einer mehrspurigen Straße montiert und der Differenzierer dafür ausgebildet, aus dem Abstand die Fahrspur zu ermitteln, auf welcher das Fahrzeug passiert.

In einer ersten Ausführungsform bestimmt der Differenzierer den Wendepunkt durch Aufsuchen jenes Punktes im Frequenzverlauf, an dem die Frequenz im Frequenzverlauf einen vorgegebenen Wert hat.

Alternativ bestimmt der Differenzierer den Wendepunkt durch Aufsuchen jenes Punktes im Frequenzverlauf, an dem die Frequenz dem Frequenzmittelwert der Fernbereiche entspricht.

In jedem Fall kann das empfangene Signal mit einer Modulationsfrequenz moduliert und die genannte Frequenz die Modulationsfrequenz sein, die im Empfänger durch Demodulation gewonnen wird.

Bevorzugt ist der Empfänger ein DSRC- oder WAVE-Empfänger.

Hinsichtlich der Vorteile der erfindungsgemäßen Funkbake wird auf die obigen Ausführungen zum Verfahren verwiesen.

Die Erfindung wird nachstehend anhand von bevorzugten Ausführungsbeispielen unter Bezugnahme auf die begleitenden Zeichnungen näher erläutert, in denen zeigt:

Fig. 1 eine Funkbake an einer mehrspurigen Straße und die geometrischen Verhältnisse bei der Passage zweier Fahrzeuge schematisch in der Draufsicht;
Fig. 2 die Frequenzverläufe der Signale zweier Fahrzeuge bei der Passage der Funkbake;
Fig. 3 die Frequenzverläufe von Fig. 2 nach ihrer Skalierung;
Fig. 4 die Differentiale der skalierten Frequenzverläufe von Fig. 3; und
Fig. 5 ein Blockschaltbild der Funkbake der Erfindung.

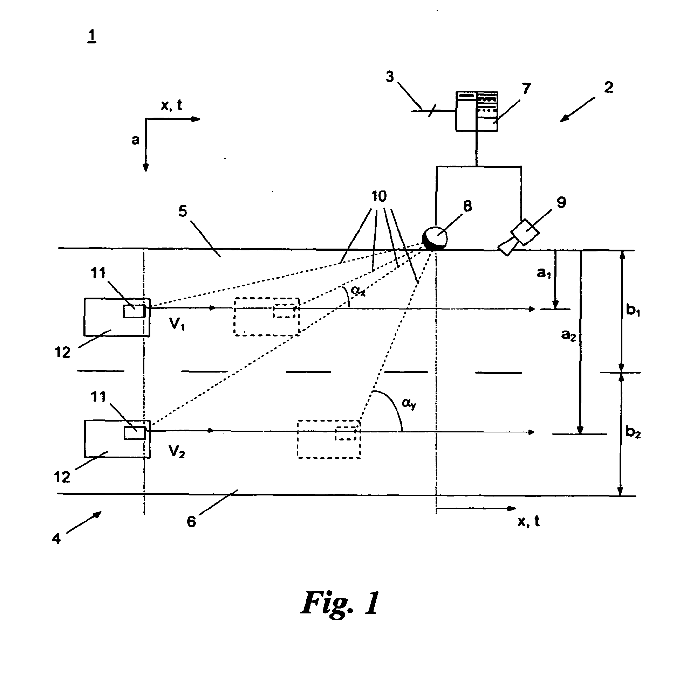

In Fig. 1 ist ein Straßenmautsystem 1 gezeigt, das eine Vielzahl geografisch verteilter Funkbaken 2 umfasst (nur eine stellvertretend gezeigt), die über Datenverbindungen 3 mit einer (nicht gezeigten) Zentrale des Straßenmautsystems 1 in Verbindung stehen. Die Funkbaken 2 sind jeweils an einer Straße 4 postiert, welche mehrere Fahrbahnen bzw. Fahrspuren 5, 6 umfassen kann.

Die Funkbake 2 setzt sich beispielsweise aus einem lokalen Rechner 7, einem (Sende-)Empfänger 8 und einer Kamera 9 zusammen, die zur Ahndung von Mautvergehen - vom Rechner 7 angesteuert - Bilder der Straße 4 mit ihren Fahrspuren 5, 6 aufnehmen kann.

Der (Sende-)Empfänger 8 dient zur Durchführung von Funkkommunikationen 10 mit Fahrzeuggeräten bzw. OBUs (onboard units) 11, die von Fahrzeugen 12 mitgeführt werden, welche auf den Fahrspuren 5, 6 die Funkbake 2 passieren. Die Funkkommunikationen 10 sind in der Regel bidirektionale Datenpaketverbindungen. Für die Zwecke der vorliegenden Erfindung ist eine Analyse der von den OBUs 11 zum (Sende-)Empfänger 8 der Funkbake 2 gesandten Signale ausreichend, so dass im Weiteren nur davon gesprochen wird, dass die OBU 11 Signale 10 an den Empfänger 8 der Funkbake 2 sendet; es versteht sich jedoch, dass in der Praxis auch Signale in der umgekehrten Richtung gesandt werden.

Die Fahrzeuge 12 mit den OBUs 11 bewegen sich auf den Fahrspuren 5, 6 mit unterschiedlichen Geschwindigkeiten $v_1$, $v_2$ in unterschiedlichen Passage bzw. Normalabständen $a_1$, $a_2$ an der Funkbake 2, genauer an ihrem Empfänger 8, vorbei. Die von den OBUs 11 ausgesandten Signale 10 unterliegen dabei jeweils frequenzabhängigen Dopplerverschiebungen gemäß der bekannten Formel

$$f_D = \frac{f_s}{1 - \dfrac{v}{c}} \qquad\qquad (1)$$

mit
fs ... Sendefrequenz des Signals 10 der OBU 11;
$f_D$ ... dopplerverschobene Empfangsfrequenz des Signals 10 in der Funkbake 2, wenn sich die OBU 11 darauf frontal zubewegen würde;
v ... Geschwindigkeit der OBU 11; und
c ... Lichtgeschwindigkeit.

Wenn sich die OBU 11 in einem Abstand a an die Funkbake 2 vorbeibewegt, kann Gleichung (1) mittels geometrischer Überlegungen geschrieben werden als

$$f_B \equiv \cos\left[\arctan\left(\frac{a}{x}\right)\right] f_D \qquad\qquad . \qquad (2)$$

mit
a ... Vertikalabstand der OBU 11 zur Funkbake 2 in dem Koordinatensystem von Fig. 1 ;
x ... Horizontalabstand der OBU 11 zur Funkbake 2 in dem Koordinatensystem von Fig. 1; unter der Annahme einer konstanten Geschwindigkeit v bzw. $v_1$, $v_2$ der OBUs 11 entspricht der Horizontalabstand auch gleichzeitig der Zeit t; und
$f_B$ ... dopplerverschobene Empfangsfrequenz des Signals 10 in der Funkbake 2, wenn sich die OBU 11 mit dem Abstand a daran vorbeibewegt.

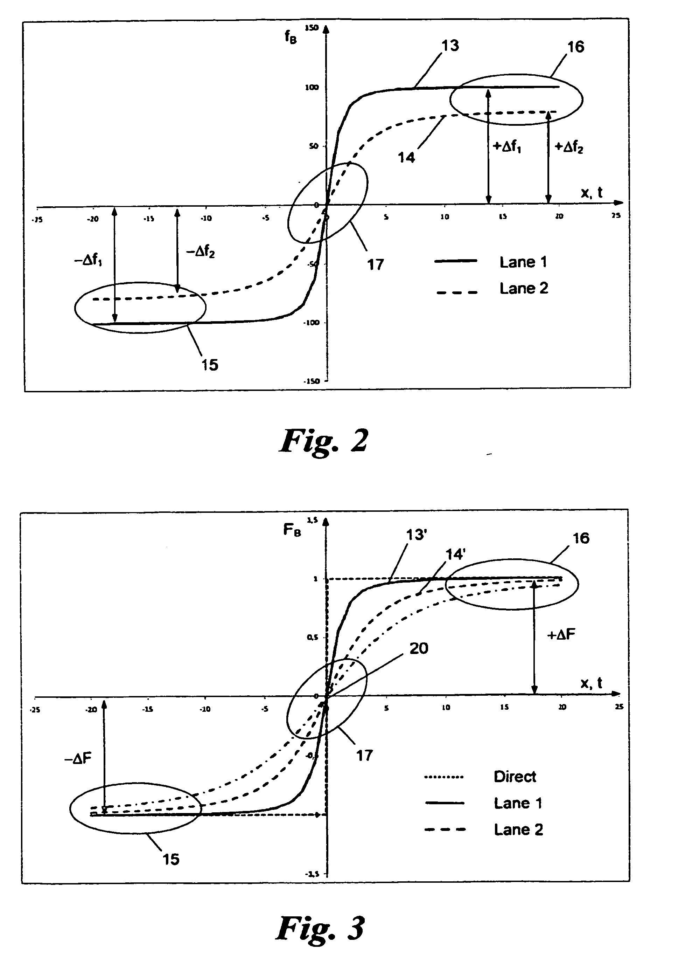

Fig. 2 zeigt zwei beispielhafte Verläufe der Empfangsfrequenz $f_B$ über dem Horizontalabstand x bzw. der Zeit t. Die durchgezogene Linie 13 zeigt den Empfangsfrequenzverlauf für die OBU 11 auf der Fahrspur 5 und die strichlierte Linie 14 jene für die OBU 11 auf der Fahrspur 6. Wie ersichtlich ist die dopplerbedingte Frequenzverschiebung $\pm\Delta f_1$, $\pm\Delta f_2$ in "Fernbereichen" 15, 16 der Frequenzverläufe 13, 14 weit vor und nach einem Bereich 17 maximaler Änderung $f_B' = \partial f_B/\partial t$ gering, d.h. in den Fernbereichen 15, 16 liegt die Frequenzänderung $f_B'$ unter einem Signifikanzschwellwert $\varepsilon$ .

In den Fernbereichen 15, 16 (und natürlich auch weiter außerhalb derselben) hängt das Ausmaß der Dopplerverschiebung $\pm\Delta f$ somit kaum mehr vom Passageabstand a sondern fast ausschließlich von der Geschwindigkeit v ab. Der Effekt der Fahrzeuggeschwindigkeit v auf die Frequenzverläufe 13, 14 kann daher eliminiert werden, indem diese so skaliert werden, dass sie in den Fernbereichen 15, 16 jeweils denselben Wert annehmen, z.B. einen vorgegebenen Wert $\pm\Delta F$ .

Fig. 3 zeigt das Ergebnis einer solchen Skalierung, bei der die aufgezeichneten Frequenzverläufe 13, 14 so skaliert ("normiert") wurden, dass sie in den Fernbereichen 15, 16 die vorgegebenen Werte $\pm\Delta F$ annehmen.

Die skalierten Frequenzverläufe 13', 14' hängen somit nur mehr vom Verhältnis a/x, d.h. des Passageabstands a zum Horizontalabstand x bzw. zur Zeit t, ab gemäß

$$f_B \equiv \cos\left[\arctan\left(\frac{a}{x}\right)\right]f_s \qquad (3)$$

Wie aus Fig. 3 ersichtlich, unterscheiden sich die skalierten Frequenzverläufe 13', 14' besonders deutlich in ihrer Steigung $f_B' = \partial F_B/\partial t$ am Ort x = t = 0, an dem ihre Kurve gleichzeitig einen Wendepunkt 20 zeigt: Je größer der Passageabstand a, desto "verschliffener" ist der skalierte Frequenzverlauf 13', 14', d.h. desto geringer ist die Steigung $f_B'$ am Wendepunkt 20. Der Passageabstand a ist somit umgekehrt proportional zur Steigung $f_B'$, d.h.

$$\frac{1}{a} \equiv \lim_{x \to 0} f_B'(x) \qquad (4)$$

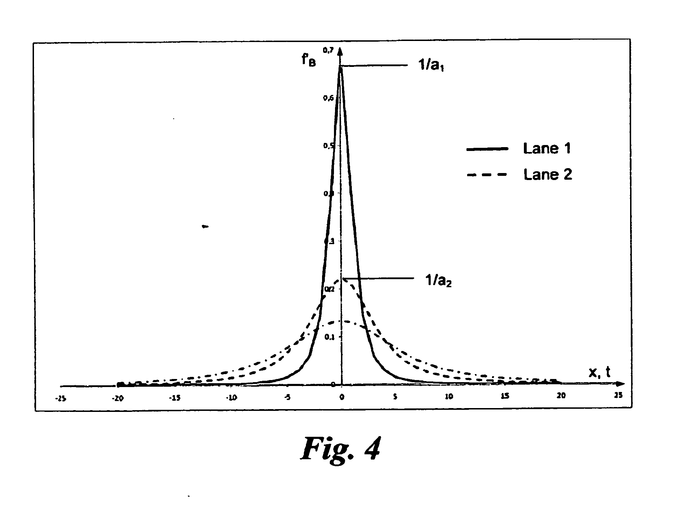

Die Steigung $f_B'$ im Wendepunkt 20 lässt sich durch Differenzieren der skalierten Frequenzverläufe 13', 14' ermitteln, und das Ergebnis der Differentiation ist in Fig. 4 gezeigt.

Aus den so ermittelten Passageabständen $a_1$, $a_2$ kann anschließend - in Kenntnis der Spurbreite $b_1$, $b_2$ der Fahrspuren 5, 6 - die jeweilige Fahrspur 5, 6 ermittelt werden, auf der sich die OBU 11 bei der Aussendung ihres Signals 10 befand. Oft reicht auch ein einfacher relativer Vergleich der Passageabstände $a_1$, $a_2$ aus, um die örtliche Abfolge der Fahrzeuge zu bestimmen.

Bislang wurde davon ausgegangen, daß die Sendefreuqenz $f_s$ des Signals 10 der OBU 11 konstant ist, d.h. ihr eigener zeitlicher Verlauf ein konstanter Verlauf ist. Es ist jedoch auch möglich, daß die OBU 11 ein Signal 10 mit einem zeitlich nichtkonstanten Sendefrequenzverlauf aussendet, beispielsweise im Falle von Frequency-Hopping-Funkkommunikationen, bei denen die Sendefrequenz $f_s$ ständig - nach einem vorgegebenen bzw. bekannten Muster - wechselt. Die aufgezeichneten Empfangsfrequenzverläufe 13, 14 werden relativ zu dem vorbekannten zeitlichen Verlauf der Sendefrequenz $f_s$ der OBU 11 - sei er konstant oder wechselnd - aufgezeichnet, d.h. auf diesen referenziert bzw. normiert, so daß der Effekt von bekannten Sendefrequenzänderungen der OBU 11 kompensiert werden kann.

Das Verfahren zum Bestimmen des Passageabstands a der die Funkbake 2 passierenden OBUs 11 gestaltet sich daher zusammengefasst wie folgt:

Zunächst wird der Frequenzverlauf 13, 14 des Signals 10 der OBU 11 - gegebenenfalls relativ auf einen vorbekannten zeitlichen Verlauf der Sendefrequenz $f_s$ bezogen - über der Zeit t (= x) aufgezeichnet. Anschließend wird im Frequenzverlauf 13, 14 jener Bereich 17 näherungsweise bestimmt, zu dem überhaupt eine signifikante Änderung auftritt, d.h. $\partial f_B/\partial t$ einen vorgegebenen Detektionsschwellwert $\sigma$ übersteigt. Dies dient dazu, einen zeitlichen Anhaltspunkt für das Aufsuchen der beiden Fernbereiche 15, 16 zu erhalten, welche vor und nach der Änderung 17 und von dieser so weit entfernt liegen müssen, dass in ihnen keine signifikante Frequenzänderung $\partial f_B/\partial t$ mehr auftritt, d.h. diese unterhalb eines vorgegebenen Signifikanzschwellwerts $\varepsilon$ liegt.

In Kenntnis der Fernbereiche 17, 18 und der in diesen auftretenden Dopplerverschiebungen $\pm\Delta f_1$, $\pm\Delta f_2$ (welche, weil ihre Änderung den Signifikanzschwellwert $\varepsilon$ nicht überschreitet, auch als quasi-konstant betrachtet werden können), können die Frequenzverläufe 13, 14 nun so skaliert werden, dass sie in ihren Fernbereichen 15, 16 jeweils denselben vorgegebenen Wert $\pm\Delta F$ annehmen.

Anschließend wird der Wendepunkt 20 in den skalierten Frequenzverläufen 13', 14' gesucht. Dazu wird jener Ort x bzw. jene Zeit t in den Frequenzverläufen gesucht, zu dem bzw. zu der die Empfangsfrequenz $f_B$ entweder den Frequenzmittelwert (die "Mitte") zwischen den "quasi-konstanten" Fernbereichen 15, 16 oder - wenn die Nennfrequenz des Signals 10 der ruhenden OBU 11 bekannt ist - diese Nennfrequenz einnimmt. Auf beide Arten kann der Wendepunkt 20 bestimmt werden, u.zw. sowohl vor der Skalierung in den Frequenzverläufen 13, 14 als auch nach der Skalierung in den skalierten Frequenzverläufen 13', 14'.

Nach Bestimmung des Wendepunkts 20 kann nun die Steigung $f_B'(x=t=0)$ der skalierten Frequenzverläufe 13', 14' im Wendepunkt 20 bestimmt (siehe Fig. 4) und daraus der Passageabstand a bzw. $a_1$, $a_2$) ermittelt werden, wie oben erläutert.

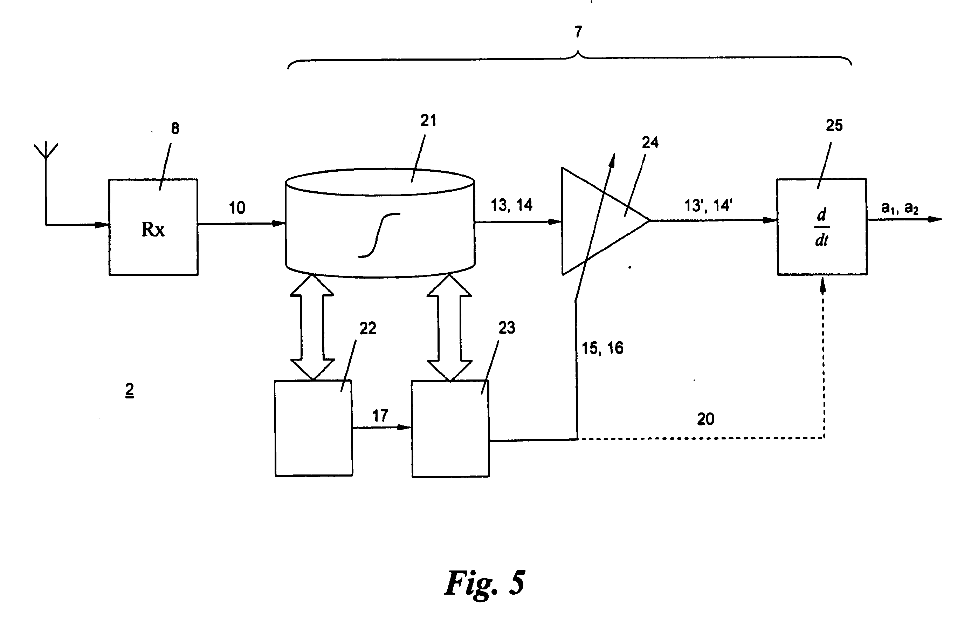

Fig. 5 zeigt eine beispielhafte Hardwarerealisierung der Funkbake 2 zur Durchführung des geschilderten Verfahrens. Im Anschluss an den Empfänger 8 verfügt die Funkbake 2 über einen Speicher 21, in dem die zeitlichen Frequenzverläufe 13, 14 der empfangenen Signale 10 aufgezeichnet werden. Ein an den Speicher 21 angeschlossener Detektor 22 detektiert den Änderungsbereich 17 ($\partial f_B/\partial t > \sigma$) und führt diese Information 17 einer Auswerteeinrichtung 23 zu. Die Auswerteeinrichtung 23 ermittelt daraus die Fernbereiche 15, 16 der Frequenzverläufe 13, 14 mit $\partial f_B/\partial t < \varepsilon$ und steuert mit dieser Information 15, 16 einen Skalierer 24 an, der die Frequenzverläufe 13, 14 zu skalierten Frequenzverläufen 13', 14' skaliert. Letztere werden einem Differenzierer 25 zugeführt, welcher die Steigung $f_B'(0)$ - $\partial f_B/\partial t$ am Ort $x = t = 0$ ihres Wendepunkts 20 berechnet, um daraus die Passageabstände $a_1$, $a_2$ zu ermitteln.

Die Komponenten 21 - 25 können beispielsweise durch den lokalen Rechner 8 der Funkbake 2 implementiert werden.

Die Erfindung ist nicht an die dargestellten Ausführungsformen beschränkt, sondern umfasst alle Varianten und Modifikationen, die in den Rahmen der angeschlossenen Ansprüche fallen.

**Patentansprüche**

1. Verfahren zum Ermitteln des Abstands (a) eines eine Funkbake (2) eines Straßenmautsystems (1) passierenden Fahrzeuges (12) zu dieser Funkbake (2), wobei das Fahrzeug (12) mit einem Fahrzeuggerät (11) ausgestattet ist, das ein Signal (10) mit einem bekannten zeitlichen Verlauf seiner Frequenz ($f_s$) aussendet, **gekennzeichnet durch** die Schritte:

   Empfangen des Signals ($f_B$) in der Funkbake (2) bei der Passage des Fahrzeuges (12) und Aufzeichnen des zeitlichen Verlaufes (13, 14) seiner Frequenz ($f_B$) relativ zum bekannten zeitlichen Verlauf;
   Detektieren einer einen vorgegebenen ersten Schwellwert ($\sigma$) überschreitenden Änderung (17) im aufgezeichneten Frequenzverlauf (13, 14);
   Aufsuchen zweier zeitlich vor und nach der detektierten Änderung (17) liegender Fernbereiche (15, 16) im Frequenzverlauf (13, 14), welche eine Frequenzänderung ($f_B'$) unter einem zweiten Schwellwert ($\varepsilon$) zeigen;
   Skalieren des aufgezeichneten Frequenzverlaufes (13, 14) derart, dass die Fernbereiche (15, 16) vorgegebene Werte ($\pm\Delta F$) annehmen; und
   Ermitteln des genannten Abstandes (a) aus der Steigung ($f_B'$) des skalierten Frequenzverlaufes (13', 14') in einem Wendepunkt (20) desselben.

2. Verfahren nach Anspruch 1, **dadurch gekennzeichnet, dass** aus dem Abstand (a) die.Fahrspur (5, 6) einer mehrspurigen Straße (4) bestimmt wird, auf welcher sich das Fahrzeug (12) bewegt.

3. Verfahren nach Anspruch 1 oder 2, **dadurch gekennzeichnet, dass** der Wendepunkt (20) durch Aufsuchen jenes Punktes im Frequenzverlauf (13, 14, 13', 14') bestimmt wird, an dem die Frequenz ($f_B$) einen vorgegebenen Wert hat.

4. Verfahren nach Anspruch 1 oder 2, **dadurch gekennzeichnet, dass** der Wendepunkt (20) durch Aufsuchen jenes Punktes im Frequenzverlauf (13, 14, 13', 14') bestimmt wird, an dem die Frequenz ($f_B$) dem Frequenzmittelwert der Fernbereiche (15, 16) entspricht.

5. Verfahren nach einem der Ansprüche 1 bis 4, **dadurch gekennzeichnet, dass** das Signal (10) vom Fahrzeuggerät (11) als zumindest eine mit einer Modulationsfrequenz modulierte Trägerfrequenz ausgesandt wird, wobei die genannte Frequenz ($f_B$) die Modulationsfrequenz ist.

6. Verfahren nach einem der Ansprüche 1 bis 5, **dadurch gekennzeichnet, dass** zum Aussenden des Signals (10) ein DSRC- oder WAVE-Sender des Fahrzeuggerätes (11) verwendet wird.

7. Funkbake (2) für ein Straßenmautsystem (1) zum Ermitteln des Abstandes (a) eines diese passierenden Fahrzeuges (12), welches mit einem Fahrzeuggerät (11) ausgestattet ist, das ein Signal (10) mit einem bekannten zeitlichen Verlauf seiner Frequenz ($f_s$) aussendet, **gekennzeichnet durch**:

   einen Empfänger (8), welcher zum Empfangen des Signals (10) eines passierenden Fahrzeuges (12) ausgebildet ist;

einen an den Empfänger (8) angeschlossenen Speicher (21), der zum Aufzeichnen des zeitlichen Verlaufes (13, 14) der Frequenz ($f_B$) des empfangenen Signals (10) relativ zum bekannten zeitlichen Verlauf ausgebildet ist;

einen an den Speicher (21) angeschlossenen Detektor (22), welcher zum Detektieren einer Änderung (17) im aufgezeichneten Frequenzverlauf (13, 14) ausgebildet ist die einem vorgegebenen ersten schwellwert($\sigma$) überschreitet;

eine an den Detektor (22) und den Speicher (21) angeschlossene Auswerteeinrichtung (23), die zum Aufsuchen zweier zeitlich vor und nach der detektierten Änderung (17) liegender Fernbereiche (15, 16) im Frequenzverlauf (13, 14) ausgebildet ist, welche eine Frequenzänderung ($f_B$') unter einem zweiten Schwellwert (e) zeigen;

einen an den Speicher (21) und die Auswerteeinrichtung (23) angeschlossenen Skalierer (24), der dazu ausgebildet ist, den aufgezeichneten Frequenzverlauf (13, 14) so zu skalieren, dass die Fernbereiche (15, 16) vorgegebene Werte ($\pm\Delta F$) annehmen; und

einen dem Skalierer (24) nachgeschalteten Differenzierer (25), der die Steigung ($f_B$') des skalierten Frequenzverlaufes (13', 14') in einem Wendepunkt (20) desselben bestimmt und daraus den Abstand (a) ermittelt.

8. Funkbake nach Anspruch 7, **dadurch gekennzeichnet, dass** sie an einer mehrspurigen Straße (4) montiert und der Differenzierer (25) dafür ausgebildet ist, aus dem Abstand (a) die Fahrspur (5, 6) zu ermitteln, auf welcher das Fahrzeug (12) passiert.

9. Funkbake nach Anspruch 7 oder 8, **dadurch gekennzeichnet, dass** der Differenzierer (25) den Wendepunkt (20) durch Aufsuchen jenes Punktes im Frequenzverlauf (13', 14') bestimmt, an dem die Frequenz ($f_B$) im Frequenzverlauf (13, 14) einen vorgegebenen Wert hat.

10. Funkbake nach Anspruch 7 oder 8, **dadurch gekennzeichnet, dass** der Differenzierer (25) den Wendepunkt (20) durch Aufsuchen jenes Punktes im Frequenzverlauf (13', 14') bestimmt, an dem die Frequenz ($f_B$) dem Frequenzmittelwert der Fernbereiche (15, 16) .entspricht.

11. Funkbake nach einem der Ansprüche 7 bis 10, **dadurch gekennzeichnet, dass** das empfangene Signal (10) zumindest eine mit einer Modulationsfrequenz modulierte Trägerfrequenz hat und die genannte Frequenz ($f_B$) die Modulationsfrequenz ist, die im Empfänger (8) durch Demodulation gewonnen wird.

12. Funkbake nach einem der Ansprüche 7 bis 11, **dadurch gekennzeichnet, dass** der Empfänger (8) ein DSRC- oder WAVE-Empfänger ist.

**Claims**

1. Method for determining the distance (a) of a vehicle (12) passing a radio beacon (2) of a road toll system (1) from this radio beacon (2), wherein the vehicle (12) is equipped with an onboard unit (11), which emits a signal (10) with a known curve of its frequency ($f_s$) over time, **characterised by** the steps:

   receiving the signal ($f_B$) in the radio beacon (2) during passage of the vehicle (12) and recording the curve (13, 14) of its frequency ($f_B$) over time in relation to the known curve over time;

   detecting a change (17) in the recorded frequency curve (13, 14) exceeding a predetermined first threshold value ($\sigma$);

   looking for two far regions (15, 16) in the frequency curve (13, 14) lying before and after the detected change (17) in time and which show a frequency change ($f_B$') below a second threshold value ($\varepsilon$);

   scaling the recorded frequency curve (13, 14) in such a manner that the far regions (15, 16) assume predetermined values ($\pm\Delta F$); and

   determining the said distance (a) from the gradient ($f_B$') of the scaled frequency curve (13', 14') in an inflection point (20) thereof.

2. Method according to claim 1, **characterised in that** the lane (5, 6) of a multi-lane road (4), on which the vehicle (12) is moving, is determined from the distance (a).

3. Method according to claim 1 or 2, **characterised in that** the inflection point (20) is determined by seeking the point in the frequency curve (13, 14, 13', 14'), at which the frequency ($f_B$) has a predetermined value.

4. Method according to claim 1 or 2, **characterised in that** the inflection point (20) is determined by seeking the point in the frequency curve (13, 14, 13', 14'), at which the frequency ($f_B$) corresponds to the frequency mean value of the far regions (15, 16).

5. Method according to one of claims 1 to 4, **characterised in that** the signal (10) is emitted by the onboard unit (11) as at least one carrier frequency modulated with a modulation frequency, wherein the said frequency ($f_B$) is the modulation frequency.

6. Method according to one of claims 1 to 5, **characterised in that** a DSRC or WAVE transmitter of the onboard unit (11) is used to emit the signal (10).

7. Radio beacon (2) for a road toll system (1) for determining the distance (a) of a vehicle (12) passing the radio beacon, which vehicle is equipped with an onboard unit (11) which emits a signal (10) with a known curve of its frequency ($f_s$) over time, **characterised by**:

a receiver (8), which is configured to receive the signal (10) of a passing vehicle (12);
a memory (21) connected to the receiver (8), which is configured to record the curve (13, 14) of the frequency ($f_B$) of the received signal (10) over time in relation to the known frequency curve over time;
a detector (22), which is connected to the memory (21) and is configured to detect a change (17) in the recorded frequency curve (13, 14) exceeding a predetermined first threshold value ($\sigma$);
an evaluation device (23), which is connected to the detector (22) and the memory (21) and is configured to look for two far regions (15, 16) in the frequency curve (13, 14) lying before and after the detected change (17) in time and which show a frequency change ($f_B'$) below a second threshold value ($\varepsilon$);
a scaling device (24), which is connected to the memory (21) and the evaluation device (23) and is configured to scale the recorded frequency curve (13, 14) in such a manner that the far regions (15, 16) assume predetermined values ($\pm \Delta F$); and
a differentiator (25) connected after the scaling device (24), which determines the gradient ($f_B'$) of the scaled frequency curve (13', 14') in an inflection point (20) thereof and determines the distance (a) therefrom.

8. Radio beacon according to claim 7, **characterised in that** it is installed on a multi-lane road (4) and the differentiator (25) is configured to determine the lane (5, 6), on which the vehicle (12) is passing, from the distance (a).

9. Radio beacon according to claim 7 or 8, **characterised in that** the differentiator (25) determines the inflection point (20) by seeking the point in the frequency curve (13', 14'), at which the frequency ($f_B$) has a predetermined value in the frequency curve (13, 14).

10. Radio beacon according to claim 7 or 8, **characterised in that** the differentiator (25) determines the inflection point (20) by seeking the point in the frequency curve (13', 14'), at which the frequency ($f_B$) corresponds to the frequency mean value of the far regions (15, 16).

11. Radio beacon according to one of claims 7 to 10, **characterised in that** the received signal (10) has at least one carrier frequency modulated with a modulation frequency, and the said frequency ($f_B$) is the modulation frequency, which is obtained in the receiver (8) by demodulation.

12. Radio beacon according to one of claims 7 to 11, **characterised in that** the receiver (8) is a DSRC or WAVE transmitter.

**Revendications**

1. Procédé de détermination de la distance (a) d'un véhicule (12), passant par une radiobalise (2) d'un système de péage routier (1), à cette radiobalise (2), le véhicule (12) étant doté d'un appareil de véhicule (11) qui émet un signal (10) dont la fréquence ($f_s$) a une courbe en fonction du temps connue, **caractérisé par** les étapes:

recevoir le signal ($f_B$) dans la radiobalise (2) lors du passage du véhicule (12) et enregistrer la courbe en fonction du temps (13, 14) de sa fréquence ($f_B$) par rapport à la courbe en fonction du temps connue;
détecter une variation (17), dépassant une première valeur de seuil ($\sigma$) prescrite, de la courbe de fréquence (13, 14) enregistrée;

rechercher deux régions éloignées (15, 16) dans la courbe de fréquence (13, 14) qui se trouvent temporellement avant et après la variation (17) détectée et qui indiquent une variation de fréquence ($f_B$') au-dessous d'une deuxième valeur de seuil ($\varepsilon$);

cadrer la courbe de fréquence (13, 14) enregistrée de telle sorte que les régions éloignées (15, 16) prennent des valeurs prescrites ($+\Delta F$); et

déterminer ladite distance (a) à partir de la pente ($f_B$') de la courbe de fréquence (13', 14') cadrée en un point d'inflexion (20) de ladite courbe.

2. Procédé selon la revendication 1, **caractérisé en ce que** la voie de roulement (5, 6) d'une route (4) à plusieurs voies, sur laquelle se déplace le véhicule (12), est déterminée à partir de la distance (a).

3. Procédé selon la revendication 1 ou 2, **caractérisé en ce que** le point d'inflexion (20) est déterminé en recherchant tout point de la courbe de fréquence (13, 14, 13', 14') où la fréquence ($f_B$) a une valeur prescrite.

4. Procédé selon la revendication 1 ou 2, **caractérisé en ce que** le point d'inflexion (20) est déterminé en recherchant tout point de la courbe de fréquence (13, 14, 13', 14') où la fréquence ($f_B$) correspond à la valeur de fréquence moyenne des régions éloignées (15, 16).

5. Procédé selon l'une des revendications 1 à 4, **caractérisé en ce que** le signal (10) est émis par l'appareil de véhicule (11) sous la forme d'au moins une fréquence porteuse modulée par une fréquence de modulation, ladite fréquence ($f_B$) étant la fréquence de modulation.

6. Procédé selon l'une des revendications 1 à 5, **caractérisé en ce que** pour émettre le signal (10) on utilise un émetteur DSRC ou WAVE d'un appareil de véhicule (11).

7. Radiobalise (2) pour un système de péage routier (1) pour déterminer la distance (a) d'un véhicule (12) qui passe par cette balise et qui est doté d'un appareil de véhicule (11) qui émet un signal (10) dont la fréquence ($f_S$) a une courbe en fonction du temps connue, **caractérisée par**:

un récepteur (8) qui est conformé pour recevoir le signal (10) d'un véhicule (12) qui passe;

une mémoire (21) qui est raccordée au récepteur (8) et qui est conformée pour enregistrer une courbe en fonction du temps (13, 14) de la fréquence ($f_B$) du signal (10) reçu par rapport à la courbe en fonction du temps connue;

un détecteur (22) qui est raccordé à la mémoire (21) et qui est conformé pour détecter une variation (17), dépassant une première valeur de seuil ($\sigma$) prescrite, de la courbe de fréquence (13, 14) enregistrée;

un dispositif d'exploitation (23) qui est raccordé au détecteur (22) et à la mémoire (21) et qui est conformé pour rechercher dans la courbe de fréquence (13, 14) deux régions éloignées (15, 16) qui se trouvent temporellement avant et après la variation (17) détectée et qui indiquent une variation de fréquence ($f_B$') au-dessous d'une deuxième valeur de seuil ($\varepsilon$);

un dispositif de cadrage (24) qui est raccordé à la mémoire (21) et au dispositif d'exploitation (23) et qui est conformé pour cadrer la courbe de fréquence (13, 14) enregistrée de sorte que les régions éloignées (15, 16) prennent des valeurs prescrites ($+\Delta F$); et

un différenciateur (25) qui est monté en aval du dispositif de cadrage (24) et qui détermine la pente ($f_B$') de la courbe de fréquence (13', 14') cadrée en un point d'inflexion (20) de ladite courbe et détermine à partir de là la distance (a).

8. Radiobalise selon la revendication 7, **caractérisée en ce qu'**elle est montée sur une route (4) à plusieurs voies et **en ce que** le différenciateur (25) est conformé pour déterminer à partir de la distance (a) la voie de roulement (5, 6) sur laquelle passe le véhicule (12).

9. Radiobalise selon la revendication 7 ou 8, **caractérisée en ce que** le différenciateur (25) détermine le point d'inflexion (20) en recherchant tout point de la courbe de fréquence (13', 14') où la fréquence ($f_B$) de la courbe de fréquence (13, 14) a une valeur prescrite.

10. Radiobalise selon la revendication 7 ou 8, **caractérisée en ce que** le différenciateur (25) détermine le point d'inflexion (20) en recherchant tout point de la courbe de fréquence (13', 14') où la fréquence ($f_B$) correspond à la valeur moyenne de fréquence des régions éloignées (15, 14).

**11.** Radiobalise selon l'une des revendications 7 à 10, **caractérisée en ce que** le signal (10) reçu a au moins une fréquence porteuse modulée par une fréquence de modulation et ladite fréquence ($f_B$) est la fréquence de modulation qui est obtenue par démodulation dans le récepteur (8).

**12.** Radiobalise selon l'une des revendications 7 à 11, **caractérisée en ce que** le récepteur (8) est un récepteur DSRC ou WAVE.

**Fig. 1**

**Fig. 2**

**Fig. 3**

*Fig. 4*

*Fig. 5*

EP 2 463 682 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5790052 A